# EUROPÄISCHE PATENTSCHRIFT

(11) **EP 1 168 058 B1**
(45) Veröffentlichungstag und Bekanntmachung des Hinweises auf die Patenterteilung: **03.09.2003**
(21) Anmeldenummer: 00113039.2
(22) Anmeldetag: 23.06.2000
(51) Int. Cl.: G03B 27/34, G03B 27/62, G02B 7/28

(54) **Schärfenkontrolle in einer fotografischen Reproduktionsvorrichtung**
Focus control in a photographic reproducing device
Contrôle du mise au point dans un dispositif de reproduction photographique

(43) Veröffentlichungstag der Anmeldung: 02.01.2002
(73) Patentinhaber: IMIP LLC, Wilmington, Delaware 19801 (US)
(72) Erfinder: Schaub, Heiner, 5430 Wettingen (CH); Koch, Willy, 8112 Otelfingen (CH); Rotach, Hansjörg, 8307 Effretikon (CH); Kobel, Peter, 8957 Spreitenbach (CH); Von Tobel, Georg, 5430 Wettingen (CH); Lehmann, Mathias, 8044 Zürich (CH)
(74) Vertreter: Schwabe - Sandmair - Marx

(56) Entgegenhaltungen:
- US-A- 4 531 830
- US-A- 4 887 125
- US-A- 5 005 967
- US-A- 5 394 205
- US-A- 5 717 500
- US-A- 6 040 891
- PATENT ABSTRACTS OF JAPAN vol. 014, no. 547 (P-1138), 5. Dezember 1990 (1990-12-05) -& JP 02 232640 A (FUJI PHOTO FILM CO LTD), 14. September 1990 (1990-09-14)
- PATENT ABSTRACTS OF JAPAN vol. 015, no. 078 (E-1037), 22. Februar 1991 (1991-02-22) -& JP 02 295370 A (CANON INC), 6. Dezember 1990 (1990-12-06)
- PATENT ABSTRACTS OF JAPAN vol. 1997, no. 03, 31. März 1997 (1997-03-31) -& JP 08 292502 A (FUJI PHOTO OPTICAL CO LTD;FUJI PHOTO FILM CO LTD), 5. November 1996 (1996-11-05)

## Beschreibung

Die vorliegende Erfindung betrifft eine fotografische Erfassungsvorrichtung nach dem Oberbegriff des Anspruches 1, insbesondere einen Scanner zum Abtasten von Filmen oder einen fotografischen Printer zum Aufbelichten der in einem fotografischen Film enthaltenen, einzelnen Bildvorlagen ("Frames") auf Fotopapier. Die vorliegende Erfindung betrifft insbesondere die Überprüfung oder Einstellung der Schärfe der Abbildung eines fotografischen Mediums (z.B. Film, transparente Folie mit Bild, Fotopapier mit Bild) auf ein Detektionsmittel (z.B. fotoelektrischer Wandler, wie z.B. CCD, z.B. fotochemischer Wandler, wie z.B. Fotopapier) in einer derartigen fotografischen Erfassungsvorrichtung.

In herkömmlichen fotografischen Abtastvorrichtungen (Scannern) oder in herkömmlichen fotografischen Kopiergeräten (Printern) wird die Schärfe der Abbildung herkömmlicherweise mittels eines Testfilms bzw. eines Testnegativs überprüft, das an der Stelle eines Films auf einer Filmbühne bei einer vorgegebenen Referenzposition befestigt wird. Hierzu muss von einem Bediener händisch der Testfilm in die Filmfördereinrichtung eingebracht werden oder händisch ein Testnegativ auf der Filmbühne befestigt und positioniert werden. Die Schärfe des mit dem Testfilm oder Testnegativ erzeugten Testbildes wird dann von einem Bediener beurteilt und die Stellung des Objektivs wird solange verändert, bis ein zufrieden stellendes Ergebnis erzielt wird.

Aufgabe der Erfindung ist es, eine fotografische Erfassungsvorrichtung bereitzustellen, bei der die Schärfenüberprüfung oder Schärfeneinstellung vereinfacht und reproduzierbar ist.

Vorstehende Aufgabe wird durch den Gegenstand des Anspruches 1 gelöst.

Die erfindungsgemäße Erfassungsvorrichtung kann als fotografisches Abtastgerät (Scanner) ausgebildet werden, indem als Detektionsmittel ein fotoelektrischer Wandler (CCD) verwendet wird. Sie kann auch als fotografisches Kopiergerät (Printer) ausgebildet werden, indem als Detektionsmittel ein fotochemischer Wandler (Fotopapier) verwendet wird.

Das fotografische Erfassungsgerät weist eine Lichtquelle auf, wie z.B. eine Halogenlampe oder Leuchtdioden. Vorzugsweise wird das Licht der Lichtquelle gebündelt und über lichtführende Mittel (Objektive, Linsen, Spiegel, Blenden etc.) zu einer Bühne geführt, die der Positionierung eines abzubildenden fotografischen Mediums dient. Das Spektrum des Lichts kann verändert werden, z.B. über Filter oder durch die Ansteuerung verschiedenfarbiger Leuchtdioden. Vorzugsweise wird das vom fotografischen Medium transmittierte Licht gemessen, indem das fotografische Medium auf einen Detektor abgebildet wird. Es kann aber auch das reflektierte Licht mittels einer Abbildungsoptik erfasst werden. Das Detektionsmittel ist geeignet, um das durch Transmission oder Reflexion moduliert Licht zu detektieren, um so die auf dem fotografischen Medium gespeicherte Bildinformation zu erfassen. Wie bereits erwähnt, sind CCD und Fotopapier geeignete Detektionsmittel.

Vorteilhaft weist die fotografische Erfassungsvorrichtung eine Einrichtung auf, um die Schärfe der Abbildung zu überprüfen und insbesondere, um eine Einstellung der Schärfe der Abbildung zu erlauben. Diese Einrichtung erfasst erfindungsgemäß einen sog. Musterträger mit einem Muster und eine Positioniermechanik, um den Musterträger in eine gewünschte Referenzposition zu bringen. Die Mechanik ist so ausgebildet, dass der Musterträger bei jedem Messvorgang zur Überprüfung der Schärfe an der gleichen Referenzposition positioniert wird. Insbesondere vorzugsweise wird der Musterträger jedes Mal in derselben Objektebene (Ebene, in der sich das abzubildende Objekt befindet) platziert. Dies stellt einen wesentlichen Vorteil gegenüber der Verwendung von Testnegativen oder Testfilmen dar. Herkömmliche Testfilme oder Testnegative können sich zum Leuchtmittel hin oder zum Detektionsmittel hin wölben und verlassen somit eine vorgegebene Objektebene. Die Wölbung kann sich mit der Umgebungstemperatur, Orientierung des Testnegativs oder Typ des Testfilms oder Testnegativs in Richtung und Ausmaß ändern. Der erfindungsgemäße Musterträger mit Muster ist vorzugsweise so starr ausgebildet, dass sich das Muster nicht wölbt. Beispielsweise ist der Musterträger als starres Metallgitter ausgebildet, wobei die Form des Gitters das Muster darstellt. Vorzugsweise weist der Musterträger ein nicht flexibles oder nicht elastisches bzw. starres Substrat auf, das das Muster trägt, bildet oder umschließt und so eine Wölbung des Musters verhindert. Das Muster, das der Überprüfung der Schärfe der Abbildung dient, ist so kontrastreich ausgebildet, dass es zumindest bei einer scharfen Abbildung durch das Detektionsmittel erkannt werden kann. Es kann sich z.B. um einen Raster, um Kreise oder andere geometrische Figuren handeln. Das Substrat, das das Muster trägt, ist vorzugsweise transparent, während das Muster selber nicht transparent ist, oder umgekehrt, um so einen möglichst starken Hell-/Dunkelkontrast in der Abbildungsebene zu erzielen. Der Musterträger wird vorzugsweise an derselben Referenzposition positioniert, bei der im herkömmlichen Betrieb der Erfassungsvorrichtung das fotografische Medium zur Erfassung positioniert wird. Die Referenzposition ist so gewählt, dass sich das Muster in der vorgegebenen Objektebene befindet.

Die Mechanik, die der Positionierung des Musterträgers dient, erlaubt es wahlweise, den Musterträger zu der Referenzposition zu bringen oder von dort zu entfernen. Der Musterträger wird dabei so weit entfernt, dass er die Abbildung eines fotografischen Mediums auf das Detektionsmittel nicht beeinträchtigt. Um eine definierte Positionierung des Musterträgers bei einer Referenzposition zu erzielen, umfasst die Mechanik vorzugsweise Positionierungsmittel, wie z.B. Schienen, Schwenkarme, Rotoren. Vorzugsweise sind auch Festhaltemittel, wie z.B. Raster oder Klinken, vorgesehen. Auch können Stellmotoren, insbesondere in Verbindung mit einem Getriebe (Zahnrändern), vorgesehen werden.

Besonders vorzugsweise dient die Mechanik einem doppelten Zweck, nämlich der Positionierung des Musterträgers und der Positionierung einer Andruckmaske zum Andrucken eines fotografischen Mediums (Films) auf einer Bühne (Filmbühne) bei der vorgegebenen Referenzposition. Die zu erfassenden Filme liegen herkömmlicherweise mit ihren Rändern, die kein Bild tragen, auf Filmführungen auf. Gegen diese Ränder werden die Filme mittels einer Andruckmaske gedrückt, damit das Filmbild (Frame) möglichst in einer definierten Ebene liegt, die die Objektebene in der Abbildungsgeometrie darstellt. Da die Maske nicht oder nicht unbedingt benötigt wird, wenn mittels des Musterträgers die Schärfe der Abbildung überprüft wird, ist die Mechanik vorzugsweise so ausgebildet, dass sie einen Austausch zwischen einer Maske und dem Musterträger ermöglicht. Beispielsweise kann sich der Musterträger zusammen mit einer oder mehreren Masken auf einem Schlitten befinden, wobei je nach Bedarf eine Maske oder der Musterträger zu der Referenzposition bringbar ist. Der Austausch oder die Positionierung des Musterträgers und insbesondere auch der Masken ist vorzugsweise automatisch durchführbar und durch eine Steuereinrichtung steuerbar.

Vorzugsweise ist mindestens eine Maske zusammen mit dem Musterträger auf einem Trageglied, wie z.B. einem Schlitten, angeordnet, so dass die mindestens eine Maske und der Musterträger zueinander eine feste Positionsbeziehung haben. Das Trageglied wird vorzugsweise entlang einem vorgegebenen Pfad, z.B. mittels Schienen, oder eines auf einer Achse gelagerten Rotors geführt. Der Pfad verläuft vorzugsweise quer zur Transportrichtung des Filmes. Die Positionierung entlang des Pfades kann mittels Sensoren überwacht werden. Bei Verwendung eines fotoelektrischen Wandlers als Detektionsmittel kann auch das Detektionsergebnis, also die mit dem fotoelektrischen Wandler detektierte Lage des Detektionsmusters, für die Positionierung mit Hilfe einer Steuerelektronik verwendet werden.

Vorzugsweise sind die Musterträger zwischen zwei Masken angeordnet, um so eine möglichst kompakte Anordnung zu erzielen und um einen möglichst geringen Verstellweg zwischen Musterträger und Maske zu haben. Die Musterträger können sich dabei z.B. in mechanisch bedingten Zwischenräumen zwischen den Masken befinden, z.B. zwischen Haltemitteln (Schrauben) oder Maskenrahmen, und insbesondere deutlich kleinere Abmessungen als die Masken aufweisen (z.B. kleiner als ein Viertel der Abmessung einer Maske), um die Anordnung besonders kompakt zu gestalten.

Vorzugsweise weist der Musterträger ein Substrat und das Muster, das von dem Substrat getragen wird, auf. Das Substrat ist vorzugsweise starr und weist vorzugsweise eine plane Oberfläche auf, auf der sich das Muster befindet. Das Substrat ist insbesondere so ausgebildet, dass es sich durch die Wärmeeinwirkung der Lichtquelle nicht verformt. Als Substrat wird insbesondere ein transparentes Material, wie z.B. Glas oder transparenter Kunststoff, wie z.B. Plexiglas, verwendet. Das Muster kann auf verschiedene Art und Weisen erzeugt werden. Zum Beispiel kann reflektierendes oder lichtabsorbierendes Material entsprechend einem vorgegebenen Muster auf das Substrat aufgedampft werden. Um das Muster zu erzeugen, kann hierzu z.B. das Substrat bis auf das Muster abgedeckt werden. Auch kann ein Fotolack aufgebracht werden, entsprechend dem Muster belichtet werden und danach fixiert werden. Ebenfalls können z.B. Muster in das Substrat geritzt werden. Die dabei entstehenden Vertiefungen können z.B. mit einem Lichtabsorbierenden und/oder Licht-reflektierenden Material ausgefüllt werden.

Die Dicke des Materials, das das Muster bildet, liegt vorzugsweise in der Größenordnung der Dicke einer fotografischen Schicht eines Films, wobei die fotografische Schicht die Bildinformation darstellt und trägt. Auf diese Art und Weise werden bei dem Musterträger Bedingungen erzeugt, wie sie auch bei einem Film gegeben sind. Die Dicke des Musters beträgt z.B. 10 µm bis 100 µm.

Die Oberfläche des Substrats muss nicht notwendigerweise plan sein, sie kann auch entsprechend der Abbildungsgeometrie leicht gekrümmt sein, um Abbildungsfehler auszugleichen und eine optimale Scharfeinstellung zu ermöglichen. Vorzugsweise ist das Substrat aber plan gestaltet. Bei herkömmlichen Scannern und Printern wird die fotografische Schicht eines Films üblicherweise so angeordnet, dass sie zu dem Detektor hinweist. Dementsprechend wird vorzugsweise der Musterträger so angeordnet, dass das Substrat zur Lichtquelle hinweist und das eigentliche Muster zum Detektor.

Ein wesentlicher Vorteil der Erfindung liegt darin, dass der Musterträger immer gleich positioniert wird, so dass sich das Muster wiederholbar immer in der gleichen Ebene befindet. Dies war bei der Verwendung von Testfilmen oder Testbildern auf Grund der dort gegebenen Wölbung nicht der Fall. Je nach verwendetem Testbild konnte sich somit täuschend eine andere Schärfeeinstellung als scheinbar optimal anbieten. Dieses Problem ist auf Grund der wiederholbar gleichen Lage des Musters mittels der Positioniermechanik beseitigt.

Erfindungsgemäß umfasst die fotografische Erfassungsvorrichtung eine Einrichtung zur automatischen Überprüfung der Schärfe und/oder zur automatischen Scharfeinstellung. Zu diesem Zweck umfasst das Detektionsmittel vorzugsweise eine fotoelektrische Wandlereinrichtung, auf der das Trägermuster abgebildet wird. Außerdem ist eine Ausleseelektronik und eine Datenverarbeitungseinrichtung (z.B. Computer, CPU) vorgesehen. Die Ausleseelektronik liest die durch das Licht erzeugten elektrischen Signale aus der Wandlereinrichtung aus und führt sie der Datenverarbeitungseinrichtung zu. Die Signale, die das Bild darstellen, werden durch die Datenverarbeitungseinrichtung im Hinblick auf die Schärfe des abgebildeten Musters ausgewertet.

Zur Schärfenbeurteilung wird insbesondere der Kontrastunterschied, also der Hell/Dunkelunterschied, zwischen benachbarten Pixeln herangezogen. Zu diesem Zweck wird vorzugsweise das Muster so ausgebildet, dass die Bereiche möglichst wenige Pixel überdecken. Zum Beispiel kann die Anzahl der überdeckten Pixel, die einen Grauwert oder Bildwert über einen bestimmten Schwellenwert haben, bekannt sein. Bei einer unscharfen Abbildung erhöht sich diese Anzahl. Auch können Musterauswerteverfahren eingesetzt werden, die insbesondere für den Randbereich eines Musters sensitiv sind. Für jedes Bild kann auf diese Weise ein Parameter berechnet werden, der die Schärfe der Abbildung quantifiziert. Eine solche Schärfebestimmung kann auch lokal, an verschiedenen Stellen im Muster durchgeführt werden, z.B. in den vier Ecken des Bildes. Bei Bedarf kann die Schärfebeurteilung auch separat in den verschiedenen Farben erfolgen. Wird als Detektionsmittel eine fotochemische Wandlereinrichtung verwendet, so kann das durch die Wandlereinrichtung erfasste Messbild (automatisch) mit einem Scanner erfasst und dann durch die Datenverarbeitungseinrichtung in Hinblick auf die Schärfe des Musters ausgewertet werden. Die automatische Schärfenüberprüfung oder Scharfeinstellung kann so analog zur Ausführungsform mit elektrischer Wandlereinrichtung erfolgen.

Sollte die Datenverarbeitungseinrichtung eine Unschärfe feststellen, so kann z.B. ein Warnsignal ausgegeben werden, das einen Bediener zu einer erneuten Scharfeinstellung veranlasst. Die Überprüfung der Scharfeinstellung kann regelmäßig erfolgen, um so eine dauerhaft scharfe Abbildung bei der Erfassungsvorrichtung zu gewährleisten. Hierzu wird die Mechanik z.B. mit einem Zeitgeber kombiniert, um, falls kein Film vorhanden ist, den Musterträger mittels der Mechanik zur Schärfeüberprüfung bei der Referenzposition in regelmäßigen Zeitabständen zu positionieren.

Vorzugsweise wird die Bewertung der Schärfe mit einer automatischen Scharfeinstellung kombiniert. Hierzu wird vorzugsweise eine Regelungselektronik vorgesehen sowie eine Verstellmechanik, die es erlaubt, zumindest eine der folgenden Einrichtungen in der Lage entlang des optischen Abbildungspfades zu verstellen: die Filmbühne mit Referenzposition bzw. Objektebene, die Abbildungsoptik und das Detektionsmittel. Vorzugsweise wird die Abbildungsoptik (insbesondere ein Objektiv oder eine Linse oder ein Linsensystem) mittels einer Verstellmechanik in der Lage verändert, während die Position von Bühne und Detektionsmittel fest bleibt. Die Verstellmechanik kann z.B. mit einem Elektromotor kombiniert werden, der von der Regelungselektronik angesteuert wird. Die Regelung kann z.B. nach dem herkömmlichen Soll-/Ist-Prinzip oder nach einem Fuzzy-Logik-Prinzip erfolgen. Vorzugsweise erfolgt eine Verstellung solange, bis die Schärfe innerhalb eines vorgegebenen Toleranzbereichs, der z.B. durch einen Schwellenwert definiert ist, liegt.

Bei einer alternativen Ausführungsform wird die Schärfe in mehreren (z.B. 10 bis 20) Positionen gemessen und die Position optimaler Schärfe anschließend aus den verschiedenen Messpunkten ermittelt. Der Verstellmechanismus Fahrt anschließend in diese ermittelte Position optimaler Schärfe. Wird die Schärfe zudem in jeder Position in verschiedenen Farben gemessen, so besteht die Möglichkeit die optimale Position noch genauer zu bestimmen bzw. für eine Farbe besonders gut zu optimieren.

Vorzugsweise umfasst ein Trageglied, auf dem sich mindestens eine Andruckmaske und der Musterträger befindet, auch jeweilig zu den Andruckmasken zugeordnete Filmführungen. Dabei führen die Filmführungen Film in eine Richtung, die vorzugsweise quer zur Verstellrichtung des Trageglieds ist.

Bei einer alternativen Ausführungsform kann die Mechanik zur Positionierung des Musterträgers auch einen Rotor aufweisen. Dieser ist vorzugsweise drehverstellbar um eine Achse gelagert. Diese Achse verläuft vorzugsweise zumindest im Wesentlichen parallel zu der Richtung des Transport des Films bzw. fotografischen Mediums. An seinem Umfang weist der Rotor vorzugsweise den Musterträger auf. Zusätzlich können Masken (Andruckmasken) für verschiedene Filmformate an dem Umfang vorgesehen sein. Eine einzelne Andruckmaske oder der Musterträger kann selektiv durch Drehverstellung des Rotors zu der Referenzposition für die Abbildung geführt werden.

Bei der folgenden detaillierten Beschreibung verschiedener Ausführungsformen werden weitere erfindungswesentliche Merkmale offenbart. Merkmale unterschiedlicher Ausführungsformen können miteinander kombiniert werden. Gleiche Bezugszeichen bezeichnen, soweit nicht anders angegeben, gleiche oder funktionsähnliche Teile.
- Fig. 1: zeigt eine Prinzipskizze eines Ausführungsbeispiels der erfindungsgemäßen Erfassungsvorrichtung,
- Fig. 2: zeigt eine Schrägansicht der Filmbühne mit Positioniermechanik der Erfassungsvorrichtung der Fig. 1,
- Fig. 3: zeigt eine Schrägansicht des Schlittens der Positioniermechanik der Fig. 2,

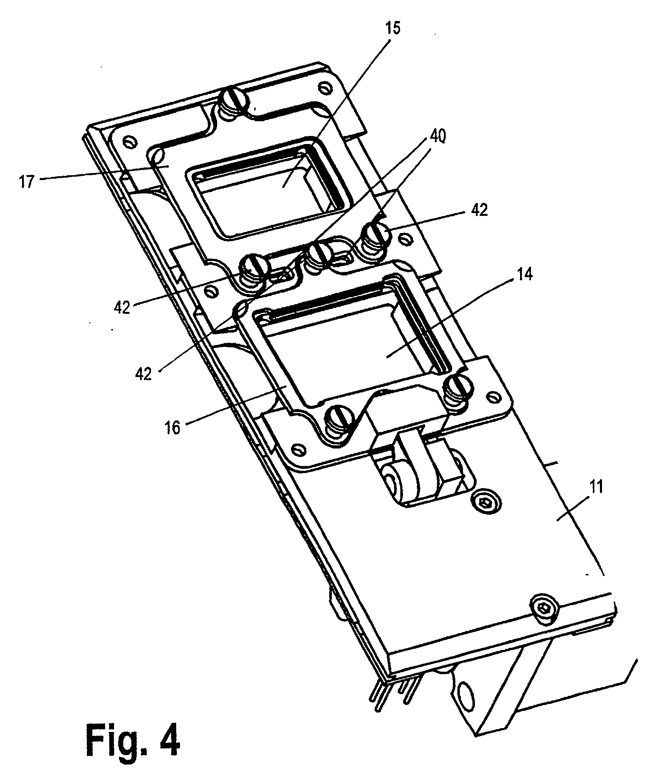

- Fig. 4: zeigt den Schlitten der Fig. 3 mit Musterträger,
- Fig. 5: zeigt einen Querschnitt durch den optischen Abbildungsteil einer weiteren Ausführungsform einer erfindungsgemäßen Erfassungsvorrichtung,
- Fig. 6: zeigt eine perspektivische Ansicht des Abbildungsteils der Fig. 5.

Bei den im Folgenden beschriebenen Ausführungsformen ist die erfindungsgemäße fotografische Erfassungsvorrichtung beispielhaft als Abtastvorrichtung (Scanner) ausgebildet. Durch Austausch des Detektors (CCD) durch Fotopapier mit entsprechender Transporteinrichtung für das Fotopapier kann ein Printer realisiert werden.

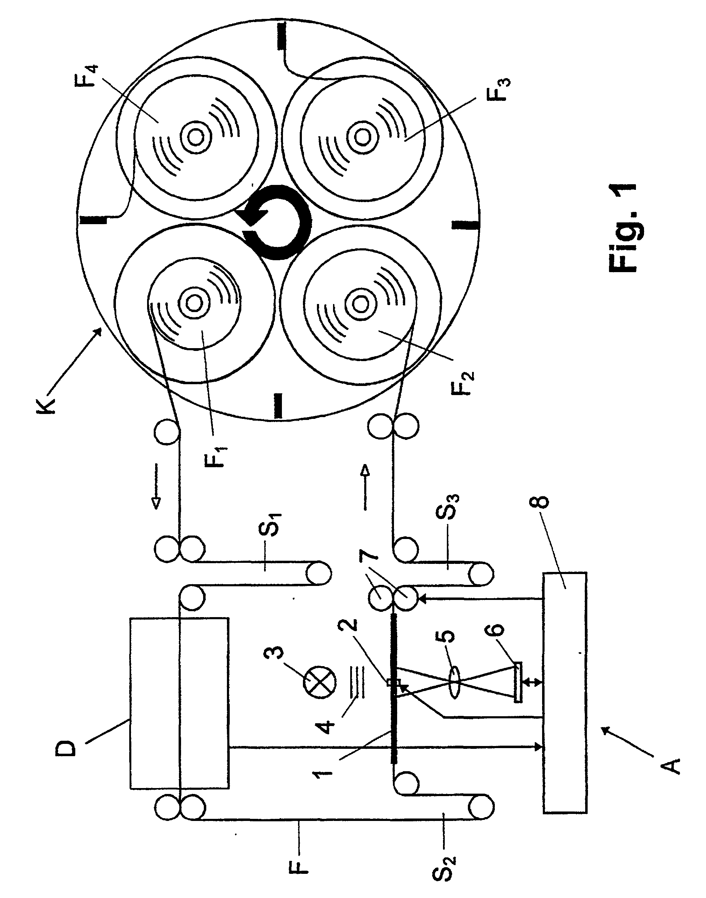

In Fig. 1 ist die erfindungsgemässe Abtastvorrichtung zum besseren Verständnis im Kontext mit an sich bekannten vor- und nachgeschalteten Komponenten dargestellt. Diese Komponenten sind ein drehbares Filmkarussell K mit vier darauf befindlichen Filmspulen F₁-F₄ und ein Bildstellen- (Frame-) Detektor D. Das Filmkarussell K, der Bildstellen-Detektor D und die als Ganzes mit A bezeichnete Abtastvorrichtung sind durch drei Schlaufenanordnungen S₁-S₃ gegenseitig mechanisch entkoppelt. Das Filmkarussell K und die mechanische Entkopplung mittels der Schlaufenanordnungen S₁-S₃ sind in der US-Patentanmeldung Ser. No. 09/384,221 (entsprechend der europäischen Patentanmeldung Nr. 98 116 162.3) in allen Einzelheiten beschrieben und bedürfen deshalb keiner näheren Erläuterung.

Ein abzutastender und möglicherweise zu kerbender Film F wird von der Filmspule F₁ abgezogen, durchläuft nacheinander den Bildstellen-Detektor D und die Abtastvorrichtung A und wird schliesslich auf die Filmspule F₂ aufgewickelt. Der Bildstellen-Detektor D ermittelt die relativen Lagen der einzelnen Bildvorlagen (Frames) auf dem Film. Die Abtastvorrichtung A wertet diese Positionsinformationen für die Positionierung der einzelnen Bildvorlagen in ihr aus. Im Einzelnen kann dies z.B. so wie in der US-A-5 285 235 erfolgen, so dass der Fachmann keiner näheren Erläuterung bedarf.

Die Abtastvorrichtung A selbst umfasst eine Filmbühne 1 für den abzutastenden Film F, eine erfindungsgemäss in bzw. an der Filmbühne 1 angeordnete Filmkerbeinrichtung 2, eine z.B. als Halogenlampe ausgebildete Weisslichtquelle 3, einen beispielsweise farbsequenziell arbeitenden Farbverschluss 4, eine Abbildungsoptik 5 und einen z.B. als zweidimensionales Feld von CCD-Fotodioden ausgebildeten fotoelektrischen Wandler 6. Ferner sind durch Walzen 7 symbolisierte Mittel zum Transport des Films F durch die Abtastvorrichtung sowie eine Elektronik 8 zur Steuerung aller elektrischen und elektronischen Komponenten der Abtastvorrichtung, insbesondere auch des Transports und der Positionierung des Films F bzw. der auf ihm befindlichen Bildvorlagen vorgesehen.

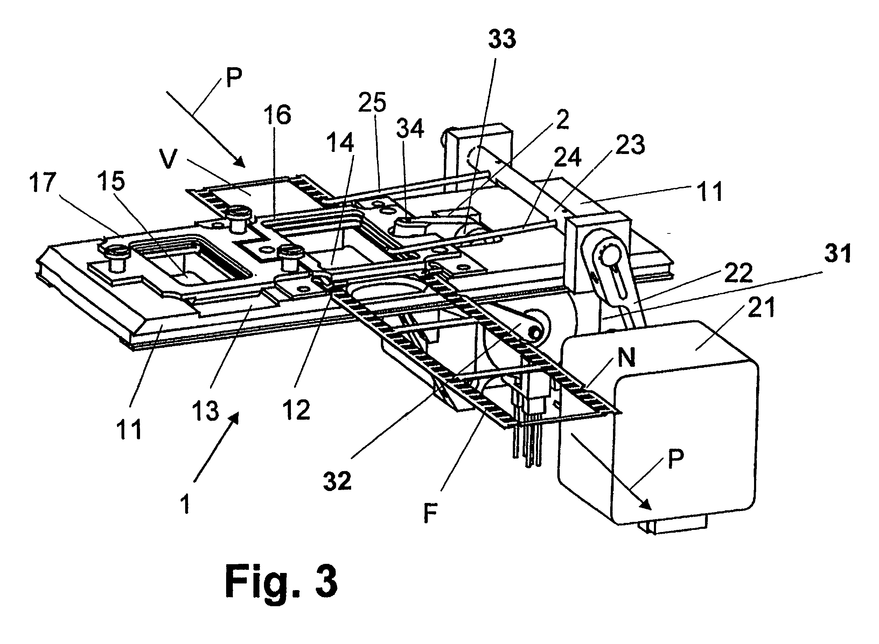

Das von der Lichtquelle 3 ausgehende Licht durchsetzt den Farbverschluss 4 und beaufschlagt dann die in der Filmbühne 1 positionierten, abzutastenden, auf dem Film F enthaltenen Bildvorlagen V (Fig.3). Die Bildvorlagen V werden mittels der Abbildungsoptik 5 auf den fotoelektrischen Wandler 6 abgebildet. Dieser löst jede abzutastende Bildvorlage V örtlich in einzelne Bildpunkte auf und wandelt die Intensität des von jedem einzelnen Bildpunkt einer Bildvorlage ausgehenden Messlichts in ein entsprechendes elektrisches Abtastsignal um. Die Bildvorlage V und damit auch der fotoelektrische Wandler 6 wird dabei gesteuert durch den Farbverschluss 4 sequenziell jeweils für eine bestimmte Belichtungsdauer mit Messlicht dreier oder mehrerer verschiedener Farben beaufschlagt, und die bei jeder Belichtung resultierenden Abtastsignale werden nach jeder Belichtung von der Elektronik 8 ausgelesen.

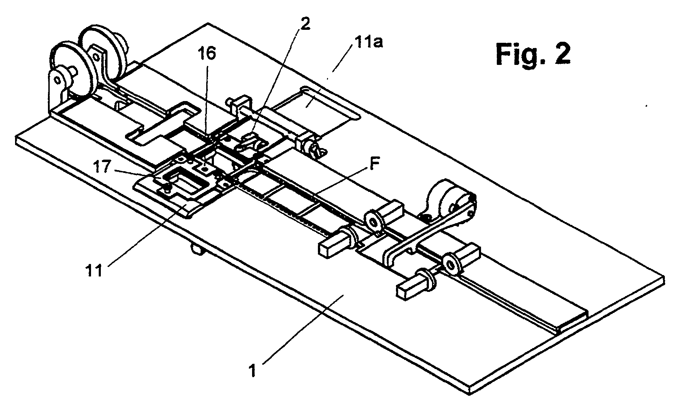

Gemäss den Figuren 2 und 3 ist auf der Filmbühne 1 ein Schlitten 11 angeordnet, welcher in der Filmbühne 1 in einer Führung 11a quer zum Transportpfad P des Films F verstellbar angeordnet ist. Der Schlitten 11 weist zwei zum Transportpfad P parallele rinnenförmige Filmführungen 12 und 13 auf, die für verschieden breite Filmformate ausgelegt sind. Typischerweise ist die Filmführung 12 auf das 135er-Format und die Filmführung 13 auf das 24 mm Format abgestimmt. Durch die Verstellung des Schlittens 11 kann jeweils die eine oder die andere Filmführung 12 bzw. 13 in den Transportpfad P eingebracht werden. Der Schlitten 11 und die Führung 11a stellen Bestandteile der Positioniermechanik für den Musterträger dar.

Im Bereich der beiden Filmführungen 12 und 13 ist je ein Abtastfenster 14 bzw. 15 vorgesehen. Diese Abtastfenster legen jeweils eine Abtastposition fest, in welcher die auf dem Film F befindlichen Bildvorlagen V positioniert werden.

Oberhalb der beiden Abtastfenster 14 und 15 ist auf dem Schlitten 11 je eine Andruckmaske 16 bzw. 17 angeordnet, welche auf die Formate der in den ihnen zugeordneten Filmführungen 12 und 13 geführten Filme abgestimmt sind. Die Andruckmasken 16 und 17 sind auf den Schlitten 11 hin und von diesem weg beweglich angeordnet. Durch Niederdrücken einer Andruckmaske gegen den darunterliegenden Schlitten wird der in der zugeordneten Filmführung laufende Film arretiert.

Zum Niederdrücken der Andruckmasken ist ein in der Filmbühne 1 ortsfest angeordneter elektrischer Antrieb vorgesehen, welcher in an sich bekannter Weise aus einem Elektromotor 21, einer vom Motor getriebenen Antriebskurbel 22, einer mit der Antriebskurbel gekoppelten Welle 23 und zwei auf der Welle befestigten, radial von dieser abstehenden Federbügeln 24 und 25 besteht. Die beiden Federbügel 24 und 25 stehen mit der jeweils im Transportpfad P befindlichen Andruckmaske 16 bzw. 17 in Eingriff und drücken diese je nach Drehstellung der Antriebskurbel 22 und damit der Welle 23 gegen den darunter liegenden Schlitten 11. Das Abheben der Andruckmaske kann z.B. durch eine federnde Lagerung oder federnde Ausbildung derselben erfolgen, wenn die beiden Federbügel 24 und 25 wieder nach oben geschwenkt werden.

Im Bereich des im Filmtransportpfad P befindlichen Abtastfensters 14 ist seitlich etwas außerhalb desselben die Filmkerbeinrichtung 2 angeordnet. Die Kerbeinrichtung 2 ist an sich konventionell aufgebaut und umfasst im Wesentlichen einen Antriebsmotor 31, eine vom Motor angetriebene Antriebskurbel 32 und einen mit der Kurbel über ein Gestänge 33 gekoppelten schwenkbaren Stanzfinger 34. Der Stanzfinger 34 ragt seitlich in den Randbereich des Films F und vollführt bei jeder Umdrehung des Antriebsmotors 31 eine Auf- und Abbewegung, wobei aus dem Rand des Films F in an sich bekannter Weise eine halbkreisförmige Kerbe N herausgestanzt wird.

Im Betrieb wird der abzutastende Film F längs des Filmtransportpfads P schrittweise durch die Abtastvorrichtung A geführt, wobei jede Einzelne auf dem Film enthaltene Bildvorlage V im Abtastfenster 14 positioniert wird. Der Transport und die Positionierung erfolgt dabei in an sich bekannter Weise mittels der motorisch angetriebenen Transportrollen 7 gesteuert durch die Elektronik 8 auf Grund der vom Bildstellen-Detektor D gelieferten Informationen über die Lage der einzelnen Bildvorlagen V auf dem Film F. Wenn eine Bildvorlage V korrekt positioniert ist und der Film F vollständig stillsteht, werden die Antriebsmotoren 21 und 31 in Bewegung gesetzt. Dabei wird der Film mittels der Andruckmaske 16 auf dem Schlitten 11 festgeklemmt und eine Kerbe N aus dem Filmrand herausgestanzt.

Nach einer einstellbaren kurzen Beruhigungsphase erfolgt dann die fotoelektrische Abtastung der in Abtastposition festgehaltenen Bildvorlage V. Anschliessend werden die Andruckmaske 16 wieder angehoben und der Stanzfinger 34 wieder nach oben bewegt und der Film weitertransportiert, bis die nächste Bildvorlage V in die Abtastposition gelangt, und so weiter.

Um eine scharfe Abbildung zu gewährleisten, sind auf dem Schlitten 11 der Positioniermechanik Musterträger 40 oder Fenster 40 zur Aufnahme von Musterträger angeordnet. In diesen Fenstern befindet sich ein Musterträger mit einem Muster. Der Musterträger kann z.B. als Glas mit aufgedampftem Muster realisiert sein. Das Muster absorbiert und/oder reflektiert das einfallende Licht zumindest teilweise. Auch kann der Musterträger als Gitter ausgebildet sein, so dass der Musterträger bereits selbst das Muster darstellt.

Um eine genaue Positionierung des Musterträgers bei einer Referenzposition zur Abbildung des Musters auf den Detektor 6 zu gewährleisten, können in dem Schlitten 11 Einrastmittel, wie z.B. Kerben oder Fortsätze, vorgesehen sein, die in komplementär ausgebildete Einrastmittel, die ebenfalls an der Filmbühne angeordnet sein können, lösbar einrasten, um eine definierte Position für die Musterfenster 40 als auch für die Abtastfenster 14 und 15 zu erzielen.

Vorteilhaft sind die Musterfenster 40 zwischen den beiden Abtastfenstern 14 und 15 angeordnet, um möglichst wenig Raum einzunehmen. Es kann aber auch ein weiteres Musterfenster in der Größe eines Abtastfensters vorgesehen werden.

Vorzugsweise sind die Musterfenster 40 zwischen den Befestigungsmitteln (Schrauben) 42, die sich zwischen den Abtastfenstern 14 und 15 befinden und die der Befestigung der Andruckmasken 16 und 17 dienen, angeordnet, um die Anordnung bestehend aus Maske und Musterträger möglichst kompakt zu gestalten. Die Musterfenster 40 sind vorzugsweise auch zwischen den Rändern der Andruckmasken 16 und 17 angeordnet.

Um den Schlitten 11 definiert zu verschieben und somit den Musterträger exakt bei einer Referenzposition zu positionieren, kann an diesem z.B. längs der Verschieberichtung eine Zahnstange angeordnet sein, in die ein Zahnrad eines Getriebes greift, das von einem ansteuerbaren Elektromotor angetrieben wird. Dadurch kann eine definierte Verschiebung zwischen den verschiedenen Einrastpositionen erzielt werden.

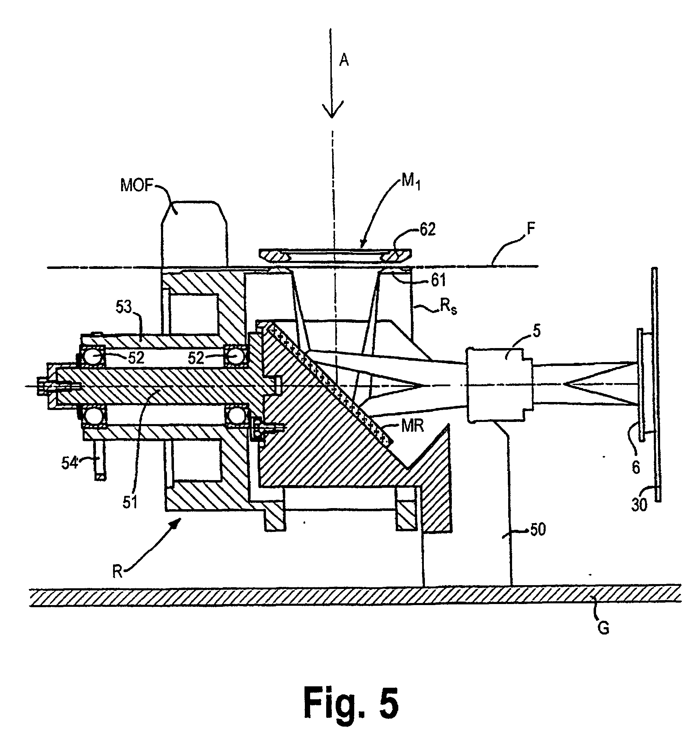

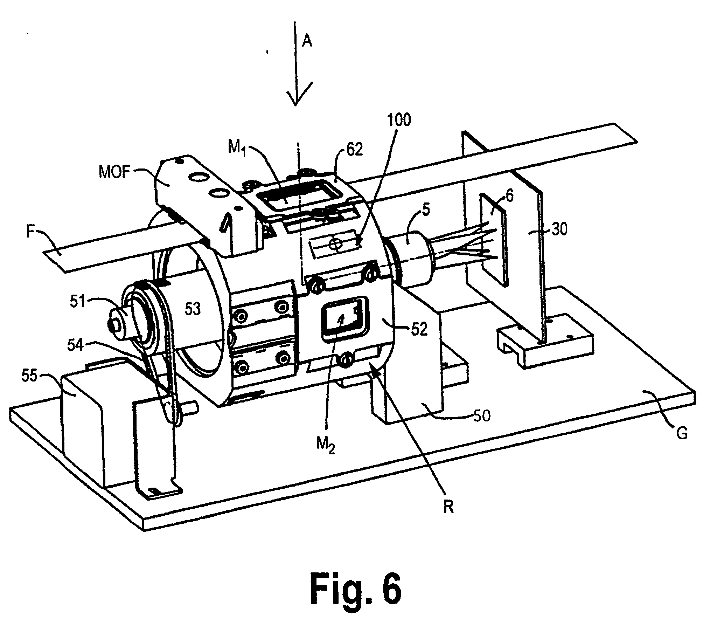

Im Zusammenhang mit den Fig. 5 und 6 wird im Folgenden eine alternative Ausführungsform für ein Bilderfassungsgerät gemäß der Erfindung gezeigt.

Durch Drehung des Rotors R kann ein Musterfenster 100 mit eingebautem Musterträger, in die Filmebene F der Fig. 5 durch Drehen des Rotors gebracht werden. Mittels der CCD 6 kann die Schärfe der Abbildung überprüft werden und gegebenenfalls kann die Stellung des Objektivs 5 geändert werden, bis eine scharfe Abbildung gegeben ist. Danach wird das Musterfenster 100 wieder aus der Filmebene (Referenzposition) entfernt, indem der Rotor wieder gedreht wird, bis eine Maske M1 oder M2 (in Abb. 6 die Maske M1) sich in der Referenzposition für die Abbildung befindet. Danach kann wieder ein Film F zugeführt werden, der dann scharf auf die CCD abgebildet wird.

Das von der CCD erfasste Muster wird zur Schärfenbestimmung durch eine CPU mit einem Referenzmuster verglichen.

Zur Veränderung der Position des Objektivs 5 ist vorzugsweise eine Verstellmechanik mit Motor (nicht gezeigt) vorgesehen, die über eine Steuerelektronik angesteuert wird, die Ergebnisse der Schärfenbestimmung berücksichtigt.

Fig. 5 zeigt einen beispielhaften Aufbau für das Bilderfassungsgerät ab der Filmebene F bis zum Detektor 6. Die Einfallsrichtung des Lichts von der Lichtquelle 3 (Fig. 1) ist mit dem Pfeil A bezeichnet. Der Film F wird durch eine Maske M1 gehalten, die eine Auflagemaske 61 und eine Andruckmaske 62 aufweist, die im geringen Abstand über der Auflagemaske angeordnet und federnd gehalten ist, so dass zwischen der Auflagemaske und der Andruckmaske ein schmaler Spalt verbleibt, durch den der abzutastende Film F hindurchgeführt wird. Ein Rotor R ist vorgesehen, an dem verschiedene Masken gehaltert sind. Auf einer Grundplatte G ist ein Träger 50 befestigt, welcher im Wesentlichen aus nicht näher bezeichneten, zur Grundplatte senkrechten und zur Grundplatte parallelen Schenkelteilen besteht. Die parallelen Schenkelteile ragen durch die offene Stirnseite Rₛ des Rotors in diesen hinein. Zwischen den parallelen Schenkelteilen ist der Umlenkspiegel MR, der das in Pfeilrichtung A eintretende Licht reflektiert, so montiert, dass er unter 45° zur Grundplatte G geneigt ist. Am freien Ende der parallelen Schenkelteile ist eine sich parallel zur Grundplatte G erstreckende Lagerwelle 51 befestigt. Auf dieser ist mittels zweier Kugellager 52 und eines am Rotor R ausgebildeten Lagerrohrs 53 der Rotor R drehbar gelagert. Das Lagerrohr 53 und damit der Rotor R ist mittels eines Antriebsriemens 54 von einem Motor 55 angetrieben. Die CCD 6 wird durch eine Platte 30 gehaltert.

Fig. 6 zeigt eine der Fig. 5 entsprechende perspektivische Ansicht, auf der eine weitere Maske M2 für ein anderes, nämlich kleineres Filmformat erkennbar ist. Weiter ist ein Magnetlesekopf MOF zum Lesen der magnetischen Information bei APS-Filmen vorgesehen. Der Rotor zusammen mit den Filmmasken bildet die Positioniermechanik, um verschiedene Filmmasken und den Musterträger 100 je nach Bedarf in die für die Durchleuchtung vorgegebene Referenzposition zu bringen.

Der Rotor R ist somit um eine zur Längsrichtung des Filmtransportpfades im Wesentlichen parallelen Achse drehverstellbar gelagert. Der Rotor R weist an seinem Umfang mindestens zwei Filmmasken M1, M2 für unterschiedliche Filmformate sowie den Musterträger mit Muster auf. Die Filmmasken und der Musterträger 100 sind durch Drehverstellung des Rotors R selektiv in den Filmtransportpfad einführbar.

## Patentansprüche

1. Fotografische Erfassungsvorrichtung zum Erfassen fotografischer Bildinformation von fotografischen Medien
mit einer Lichtquelle (3),
mit einer Bühne (1) für das fotografische Medium, um für das fotografische Medium (F) eine Referenzposition für die Abbildung des fotografischen Mediums mittels einer Abbildungsoptik (5) auf ein Detektionsmittel (6) vorzugeben, das das von der Lichtquelle (3) stammende und durch das fotografische Medium (F) entsprechend der Bildinformation modulierte Licht detektiert,
**gekennzeichnet durch**
einen Musterträger (40) mit einem Muster zur Kontrolle der Schärfe der Abbildung und einer Positioniermechanik (11,11a;R), die den Musterträger entfembar zu der Referenzposition bringt, um das Muster **durch** die Abbildungsoptik (5) auf das Detektionsmittel (6) abzubilden.

2. Fotografische Erfassungsvorrichtung nach Anspruch 1, weiter **dadurch gekennzeichnet, dass** die Positioniermechanik (11,11a) ausgebildet ist, um bei der Referenzposition einen Austausch zwischen mindestens einer Maske, die das fotografische Medium bei der Referenzposition festhalten kann, und dem Musterträger vorzunehmen.

3. Fotografische Erfassungsvorrichtung nach Anspruch 2, weiter **dadurch gekennzeichnet, dass** die Positioniermechanik einen Schieber (11) oder Rotor (R) aufweist, auf dem die mindestens eine Maske (16,17;M1,M2) und der Musterträger angeordnet sind, wobei durch Verändern der Lage des Schiebers oder der Drehstellung des Rotors entweder die mindestens eine Maske oder der Musterträger bei der Referenzposition positionierbar ist.

4. Fotografische Erfassungsvorrichtung nach Anspruch 1 bis 3, weiter **dadurch gekennzeichnet, dass** mindestens zwei Masken vorgesehen sind, wobei der Musterträger zwischen zwei Masken angeordnet ist.

5. Fotografische Erfassungsvorrichtung nach Anspruch 1 bis 4, weiter **dadurch gekennzeichnet, dass** der Musterträger ein transparentes Substrat aufweist, das das Muster trägt, wobei das Muster in einer Ebene liegt und zumindest in etwa die Dicke einer fotografischen Schicht eines fotografischen Films aufweist, wobei die Ebene, in der das Muster liegt, mittels der Positioniermechanik zur Schärfenkontrolle in einer vorgegebenen Referenzebene platziert wird.

6. Fotografische Erfassungsvorrichtung nach Anspruch 1 bis 5, weiter **dadurch gekennzeichnet, dass** der Musterträger ein Substrat aufweist, auf dem sich das Muster befindet, wobei der Musterträger bei der Referenzposition durch die Positioniermechanik so angeordnet wird, dass das Substrat der Lichtquelle und das Muster dem Detektionsmittel zugewandt ist.

7. Fotografische Erfassungsvorrichtung nach Anspruch 1 bis 6, weiter **dadurch gekennzeichnet, dass** das Detektionsmittel eine fotoelektrische Wandlereinrichtung (CCD), eine Ausleseelektronik und eine Datenverarbeitungseinrichtung zur-Auswertung der mittels der Ausleselektronik von der Wandlereinrichtung ausgelesenen Signale aufweist, wobei die Datenverarbeitungseinrichtung die Schärfe des abgebildeten Musters bewertet.

8. Fotografische Erfassungsvorrichtung nach Anspruch 7, weiter **gekennzeichnet durch** eine Scharfstellungs-Regelungseinrichtung, die basierend auf der Schärfenbewertung der Datenverarbeitungseinrichtung zur Scharfstellung der Abbildung das Verhältnis des Abstandes von Bühne zu Abbildungsoptik zu dem Abstand von Abbildungsoptik zu Detektionsmittel ändert.

9. Fotografische Erfassungsvorrichtung nach Anspruch 8, weiter **dadurch gekennzeichnet, dass** die Datenverarbeitungseinrichtung eine Bewertung der Schärfe für verschiedene Spektralbereiche des detektierten Lichts gesondert durchführt und die Scharfstellungs-Regelungseinrichtung die Scharfstellung basierend auf den für die verschiedenen Spektralbereiche durchgeführten Schärfenbewertungen optimiert.

10. Fotografischer Printer oder Scanner mit einer fotografischen Erfassungsvorrichtung nach einem der Ansprüche 1 bis 9.

## Claims

1. Photographic sensing device for sensing photographic image data from photographic media, with
a light source (3)
a stage (1) for the photographic medium, in order to pre-define a reference position for the photographic medium (F) from which the photographic medium is reproduced on a sensing means (6) by an optical imaging system (5), the light originating from the light source (3) and modulated by the photographic medium (F) depending on the image data being sensed,
**characterised by**
a patterned substrate (40) with a pattern for controlling the focus of the image and a positioning mechanism (11, 11a; R) which moves the patterned substrate to the reference position and can move it away therefrom, in order to reproduce the pattern on the sensing means (6) by means of the optical imaging system (5).

2. Photographic sensing device as claimed in claim 1, further **characterised in that** the positioning mechanism (11, 11a) is designed to replace at least one mask at the reference position, capable of holding the photographic medium stationary at the reference position, with the patterned substrate.

3. Photographic sensing device as claimed in claim 2, further **characterised in that** the positioning mechanism has a carriage (11) or rotor (R), on which the at least one mask (16, 17; M1, M2) and the patterned substrate are disposed and either a mask or the patterned substrate can be positioned at the reference position by varying the position of the carriage or the rotary position of the rotor.

4. Photographic sensing device as claimed in claim 1 to 3, further **characterised in that** at least two masks are provided, the patterned substrate being arranged between two masks.

5. Photographic sensing device as claimed in claim 1 to 4, further **characterised in that** the patterned substrate has a transparent substrate, which bears the pattern, the pattern lying in a plane and being approximately of the same thickness as a photographic layer of a photographic film, the plane in which the pattern lies being positioned by the positioning mechanism in a predefined reference plane to control the focus.

6. Photographic sensing device as claimed in claim 1 to 5, further **characterised in that** the patterned substrate has a substrate on which the pattern is disposed, the patterned substrate being positioned by the positioning mechanism at the reference position so that the substrate is directed towards the light source and the pattern towards the sensing means.

7. Photographic sensing device as claimed in claim 1 to 6, further **characterised in that** the sensing means has a photoelectric sensing element (CCD), an electronic reading system and a data processing system for evaluating the signals of the photoelectric sensing element read by means of the electronic reading system, and the data processing system evaluates the focus of the reproduced pattern.

8. Photographic sensing device as claimed in claim 7, further **characterised by** a focus-adjustment control device, which varies the ratio between the distance from the stage to the optical imaging system and the distance from the optical imaging system to the sensing means on the basis of the focus evaluation made by the data processing system in order to adjust the focus of the image.

9. Photographic sensing device as claimed in claim 8, further **characterised in that** the data processing system runs a separate evaluation of the focus for different spectral ranges of the detected light and the focus-adjustment control system optimises the focus setting on the basis of the focus evaluations run for the different spectral ranges.

10. Photographic printer or scanner with a photographic sensing device as claimed in one of claims 1 to 9.

## Revendications

1. Dispositif d'acquisition photographique pour acquérir une information d'image photographique de supports photographiques
comportant une source lumineuse (3),
comportant un plateau (1) pour le support photographique, afin de donner au support photographique (F) une position de référence pour la reproduction du support photographique au moyen d'une optique de reproduction (5) sur un moyen de détection (6), lequel détecte la lumière provenant de la source lumineuse (3) et modulée par le support photographique (F) en fonction de l'information d'image,
**caractérisé par**
un porte-modèle (40) avec un modèle pour le contrôle de la netteté de la reproduction et avec un mécanisme de positionnement (11, 11a ; R) qui permet d'éloigner le porte-modèle de la position de référence afin de reproduire le modèle au moyen de l'optique de reproduction (5) sur le moyen de détection (6).

2. Dispositif d'acquisition photographique selon la revendication 1, **caractérisé en outre en ce que** le mécanisme de positionnement (11, 11a) est réalisé pour procéder, dans la position de référence, à un échange entre au moins un masque qui peut fixer le support photographique dans la position de référence, et le porte-modèle.

3. Dispositif d'acquisition photographique selon la revendication 2, **caractérisé en outre en ce que** le mécanisme de positionnement comporte un coulisseau (11) ou rotor (R) sur lequel sont disposés le ou les masques (16, 17 ; M1, M2) et le porte-modèle, le ou les masques ou le porte-modèle pouvant être positionnés pour la position de référence, par variation de la position du coulisseau ou de la position de rotation du rotor.

4. Dispositif d'acquisition photographique selon la revendication 1 ou 2, **caractérisé en outre en ce que** sont prévus au moins deux masques, le porte-modèle étant disposé entre deux masques.

5. Dispositif d'acquisition photographique selon les revendications 1 à 5, **caractérisé en outre en ce que** le porte-modèle comporte un substrat transparent qui porte le modèle, le modèle se situant dans un plan et présentant au moins approximativement l'épaisseur d'une couche photographique d'un film photographique, le plan, dans lequel se situe le modèle, étant placé dans un plan de référence prédéfini, au moyen du mécanisme de positionnement pour le contrôle de la mise au point.

6. Dispositif d'acquisition photographique selon les revendications 1 à 5, **caractérisé en outre en ce que** le porte-modèle comporte un substrat sur lequel se trouve le modèle, le porte-modèle dans la position de référence étant disposé au moyen du mécanisme de positionnement de manière que le substrat soit tourné vers la source lumineuse et le modèle vers le moyen de détection.

7. Dispositif d'acquisition photographique selon les revendications 1 à 6, **caractérisé en outre en ce que** le moyen de détection comporte un dispositif photoélectrique de conversion (CCD), une électronique de sélection et un dispositif de traitement des données pour l'exploitation des signaux extraits du dispositif de conversion au moyen de l'électronique de sélection, le dispositif de traitement des données évaluant la netteté du modèle reproduit.

8. Dispositif d'acquisition photographique selon la revendication 7, **caractérisé en outre par** un dispositif de réglage de la mise au point qui, à partir de l'évaluation de la netteté par le dispositif de traitement des données, modifie le rapport entre la distance du plateau à l'optique de reproduction et la distance de l'optique de reproduction au moyen de détection, pour la mise au point de la reproduction.

9. Dispositif d'acquisition photographique selon la revendication 8, **caractérisé en outre en ce que** le dispositif de traitement de données exécute de manière séparée une évaluation de la netteté pour différents domaines spectraux de la lumière détectée, et le dispositif de réglage de la mise au point optimise la mise au point à partir des évaluations de netteté exécutées pour les différents domaines spectraux.

10. Tireuse photographique ou scanner comportant un dispositif d'acquisition photographique selon l'une des revendications 1 à 9.
